Europäisches Patentamt

European Patent Office

Office européen des brevets

(11) Publication number: **0 040 670**
**B1**

# EUROPEAN PATENT SPECIFICATION

(45) Date of publication of patent specification: **02.10.85**

(21) Application number: **81101592.4**

(22) Date of filing: **05.03.81**

(51) Int. Cl.⁴: **B 01 D 13/04** // B01D13/00, C08L27/16

(54) Porous vinylidene fluoride polymer membrane and process for its preparation.

(30) Priority: **28.03.80 US 135034**

(43) Date of publication of application:
**02.12.81 Bulletin 81/48**

(45) Publication of the grant of the patent:
**02.10.85 Bulletin 85/40**

(84) Designated Contracting States:
**DE GB IT NL**

(56) References cited:
EP-A-0 012 557
FR-A-2 333 825
FR-A-2 360 623
FR-A-2 391 836
US-A-3 615 024
US-A-3 642 668
US-A-3 817 772

(73) Proprietor: **PENNWALT CORPORATION**
**Pennwalt Building Three Parkway**
**Philadelphia Pennsylvania 19102 (US)**

(72) Inventor: **Benzinger, William Donald**
**408 Green Hill Lane**
**Berwyn Pennsylvania 19312 (US)**
Inventor: **Robinson, Donald Nellis**
**316 Colonial Avenue**
**Collegeville Pennsylvania (US)**

(74) Representative: **Kraus, Walter, Dr. et al**
**Patentanwälte Kraus Weisert & Partner Thomas-**
**Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention is directed to a process for preparing an ultrafiltration membrane of a resinous, film-forming polymer selected from the group consisting of (a) vinylidene fluoride homopolymer, (b) copolymers of at least 70 weight percent of vinylidene fluoride and up to 30 weight percent tri- or tetra-fluoroethylene, and (c) a blend of no less than about 75 weight percent of either (a) or (b) with no greater than about 25 percent of a thermoplastic methyl methacrylate polymer, said membrane having a surface layer containing a multiplicity of pores having a diameter within the range of from 1 to 100 nm, and a support layer thicker than and having less resistance to fluid flow than said surface layer, by casting from solvent/non-solvent systems.

Methods for preparing membranes containing pores of dimensions useful for filtering out substances of various sizes, including salts in solution and viruses are known. However, none of these disclosed methods has been found to be satisfactory for preparing membranes of vinylidene fluoride polymer having a pore size range suitable for ultrafiltration. Furthermore, known solvent casting methods of forming porous vinylidene fluoride polymer sheets require that the sheets be held under restraint during the forming process to avoid uneven shrinkage causing a wrinkled, rough-surfaced product.

Methods for preparing porous membranes and the resulting products are disclosed in a number of publications. US—A—3 133 132 describes cellulose ester membranes prepared from solutions containing pore-forming perchlorate salts. This document does not teach one how to make vinylidene fluoride polymer membranes having ultrafiltration characteristics. US—A—3 567 810 also describes methods for preparing membranes, however, vinylidene fluoride polymer membranes are not described in this document. US—A—3 607 329 describes methods of preparation for membranes of cellulose acetate butyrate. The disclosure of this document does not suggest that the method of preparation is useful for preparing membranes of any other polymer. US—A—3 817 772 discloses porous polymer membranes, including polyvinylidene fluoride membranes. In the production of these polymer membranes, the pores are formed by lixiviation of the film to remove inorganic salt from the binder (polymer) matrix. The production of asymmetric membranes as intended according to the present invention is not disclosed in this document. According to US—A—3 948 823 cross-linked (nonthermoplastic) copolymers are used to form membranes which resist the force of high hydraulic pressure during filtration. The method of forming porous membranes involves forming a solution of the matrix polymer (which may be polyvinylidene fluoride) an ADD polymer (for control of porosity) a crosslinking agent, a solvent for the matrix polymer and a solvent for the ADD polymer. Asymmetric membranes as intended in accordance with the present invention are not disclosed. US—A—4 069 151 describes the preparation of polyether-polycarbonate block polymer membranes from an organic solvent solution of the block polymer dissolved in a suitable solvent for this material. There is no suggestion that the method of this document would be useful for preparation of vinylidene fluoride polymer membranes.

Japanese patent 49—126 572 discloses the use of a combination of slow-drying and fast-drying solvents to prepare a polyvinylidene fluoride membrane having very fine pores. DE—A—2 735 443 describes a process of forming membranes from graft copolymers wherein polyvinylidene fluoride is used as a base polymer. Moreover, FR—A—2 333 825 and US—A—3 615 024 disclose processes for casting PVDF membranes from solvent/non-solvent systems. FR—A—2 333 825 also mentions TFE copolymers. US—A—3 642 668 mentions higher-boiling alcohols as suitable non-solvents although this document is concerned with two-stage processes.

Particularly US—3 615 024 discloses a process for making a porous polymer membrane by casting a solvent-diluent dope of the polymer on a surface, leveling the membrane for about a minute, thereafter washing preferentially one surface of the membrane with a diluent liquid such as water or methyl alcohol, and then replacing all of the solvent with the diluent. Polyvinylidene fluoride is mentioned as a polymer from which membranes may be prepared in accordance with the disclosure although there is no specific working example of its use. Solvents such as dimethyl formamide, dimethyl acetamide, dimethyl sulfoxide and N-methyl pyrrolidone are disclosed as suitable solvents for certain polymers used in the working examples. The product of this known process is disclosed to be an assymetric membrane having a thin porous layer or "skin" having pores ranging in size of from 1.0 to 1000 nm. The skin is supported on a much thicker layer through which fluid can pass with little hydraulic resistance.

The disadvantages of these prior art processes are described in US—A—3 615 024. column 11, lines 50 to 56 and FR—A—2 333 825 at page 2, lines 28 to 30. US—A—3 642 668 does not disclose an ultrafiltration membrane since the pore sizes of this reference range from 0.5 to 2 µm.

The object of the present invention is to overcome the disadvantages of the prior art processes by selecting specific compositions and process conditions from the broad range of the state of the art in order to improve the characteristics of PVDF membranes.

According to the present invention this object is achieved in a process as defined above by casting on a smooth solid surface a solution of said resinous, film-forming polymer having a polymer concentration ranging from 12 to 32 weight percent, 65 to 80 weight percent of a solvent selected from the group consisting of triethyl phosphate, hexamethyl phosphoramide, 1-methyl-2-pyrrolidinone, dimethyl acetamide, dimethyl formamide, propylene carbonate and mixtures of said solvents, and from 1 to 10 weight percent of a non-solvent for said polymer selected from the group consisting of glycerol, ethylene glycol, phosphoric acid and mixtures thereof, to form a sheet, evaporating a portion of said liquid mixture from said sheet, and contacting said sheet with a liquid gelation medium.

The formed membrane may also be heat stabilized before or after drying, if desired, to avoid shrinkage when used to filter heated fluids.

As previously stated, the concentration of the resinous, film-forming polymer dissolved in the solvent-nonsolvent mixture ranges from 12 to 32 weight percent. The optimum concentration of the resinous polymer in the solution prior to forming the sheet is 15 to 25 percent by weight when the polymer is vinylidene fluoride homopolymer. With copolymers, higher concentrations up to about 30% are preferred. Solution temperatures preferably range from 50 to 110°C but variations in the solution temperature produce no apparent effect on ultrafiltration properties of the membranes. The properties of the membranes are not significantly affected by their formed thickness probably due to the fact that the membranes are asymmetric and ultrafiltration takes place at a very thin "skin" or layer of critical porosity at the top surface, the rest of the membrane being more porous and offering little resistence to flow. The preferred thickness of the prepared porous gel membrane is from 254 to 1270 μm.

The solvents used in this invention, as listed heretofore, are triethyl phosphate, hexamethyl phosphoramide 1-methyl-2-pyrrolidinone, dimethyl acetamide, dimethyl formamide and propylene carbonate. Of the above mentioned solvents, triethyl phosphate is preferred because membranes formed with its use are smoother. That is, vinylidene fluoride polymer membranes prepared from casting solutions containing triethyl phosphate as the solvent and one of the specified non-solvents of this invention do not require taping or restraining of the edges of the sheet during the gelation step and are smooth, unwrinkled membranes which have not shrunk unevenly during processing. When utilizing triethyl phosphate as the solvent it is generally used in an amount ranging from 65 to 80 weight percent, preferably from 70 to 79 percent. The remaining specified solvents are used generally in the same amounts.

The non-solvent component of the sheet-forming system is the most critical element in the process for obtaining the desired pore formation and there is no obvious rationale for choosing the optimum non-solvent. The non-solvent should be soluble in and compatible with the solution of polymer in the specified solvent; it should be soluble in the gelation medium (water); and it should be less volatile than the solvent. The latter condition is desirable but not essential. However, there are a large number of non-solvents which meet these conditions. Some of these non-solvents have been tried, and a significant variation in permeability of the resulting membranes has been found. Membranes prepared with glycerol and with phosphoric acid have the highest permeability while still retaining macromolecular solutes. Glycerol has been found to be an effective non-solvent (pore producing agent) at various concentrations and therefore is the preferred non-solvent.

The vinylidene fluoride polymer dissolved in the specified solvent-non-solvent medium is cast on a smooth solid surface or substrate. The solvent is then allowed to evaporate from the formed sheet but only to an extent necessary to provide a material which will have the desired porosity after treatment with the gelation medium. Evaporation is generally brought about by exposure of the formed (cast) sheet to air for about 1 to 15, preferably about 5 minutes. The evaporation time can be decreased by increasing the ambient temperature during evaporation. While a portion of the solvent is removed by evaporation, it has been noted that the sheet gains weight by picking up moisture from the air.

The gelation treatment, after the evaporation step, is required to convert the liquid film into a solid membrane. The gelation medium is kept at a temperature ranging from −10 to +50°C, preferably 0 to 5°C, and the dwell time for exposure of the sheet to the gelation medium is sufficient to solidify the membrane and preferably at least about 15 minutes.

A stabilizing treatment of the membrane subsequent to the gelation treatment may be provided, if desired. It is preferable to dimensionally stabilize those polymer membranes which tend to shrink on exposure to elevated temperatures to which they may be exposed during use. Stabilization is conveniently carried out by immersing the sheet in warm water ranging in temperature from 20 to 100°C for at least about 1 minute. Maximum shrinkage of the membranes of this invention generally occurs after about 30 minutes at 100°C. Membranes which have been dried following gelation may also be stabilized by subjecting the dried membrane to heat in an oven at the same temperature range as used for the hot water treatment.

The membrane may be dried before or after heat stabilization. It may be dried by merely spreading or hanging the membrane in air at ambient temperature or in an oven at a temperature up to 100°C. The membrane may also be vacuum dried. Alternatively, the membrane may be partially dried by removing surface or excess water and then treating the sheet with a humectant e.g., glycerol, or a surfactant e.g., "Triton X100" (trade mark) or a wetting agent, followed by complete removal of water.

Membranes which have been dried must be rewet to function as a filtration element. Humectant or surfactant impregnated membranes may be rewet when ready for use by treating with water. Membranes which have been dried without the benefit of humectant or surfactant are first treated with a water-miscible, organic liquid or water solution thereof in which the membrane is insoluble. Thereafter, the membrane is washed with water to remove the organic liquid and provide a rewet membrane ready for filtration use.

In the case of ultrafiltration of non-aqueous organic or inorganic liquid media, a dry membrane may be used. Alternatively, a water-wet, gel membrane may be used provided the water is removed by exchange with suitable water miscible exchange liquid.

Membranes prepared with blends of vinylidene fluoride polymer and methyl methacrylate polymer may be beneficially extracted after gelation with acetone or similar solvent to selectively dissolve some of the methacrylate polymer. This treatment is not critical for the preparation of ultrafiltration membranes but appears to increase permeability somewhat. The extraction step is carried out, for example, by immersing the porous membrane in the solvent overnight at room temperature and then thoroughly washing the membrane with distilled water.

The resinous, thermoplastic methyl methacrylate polymer which is useful for this invention is a methyl methacrylate homopolymer or a copolymer of at least a major proportion of methyl methacrylate and at least one other copolymerizable monomer including, for example, lower alkyl methacrylates, styrene, alpha methylstyrene and acrylonitrile. The methacrylate polymer is used in the blend in amounts of no greater than about 25 percent, based on the weight of the blend. The vinylidene fluoride polymer component of the blend is either the homopolymer or a copolymer of at least 70 weight percent vinylidene fluoride with tri-or tetrafluoroethylene.

The method of preparing the resinous, thermoplastic vinylidene fluoride and methacrylate polymers is not critical to the process described herein. Emulsion polymerization or suspension polymerization techniques are usually employed.

Blends or alloys of vinylidene fluoride resins and methacrylate resins are prepared by mixing the resins in one of the solvents, e.g., triethyl phosphate and non-solvent liquids listed above in a manner as described for the vinylidene fluoride polymer alone. After gelation of the formed alloy membrane, extraction with acetone may be advantageous to increase permeability.

The porous membranes formed by the process of this invention are successfully and advantageously employed in a pressure activated process for separating components of a solution containing solutes of molecular weight above about 6000. These membranes are especially useful in the ultrafiltration of solutions of thermally-unstable or biologically-active materials since this process for separation does not require heat or exposure to chemical reagents. Furthermore, if the materials to be separated are corrosive or hot, the membranes of this invention can be advantageously employed because they are stable up to about 150°C and are resistant to many chemicals.

The preparation of porous membranes in accordance with the process of this invention and their usefulness as ultrafiltration membranes is demonstrated by the following examples.

Example 1

A casting solution was prepared by agitating a mixture of vinylidene fluoride homopolymer powder, (Kynar (trade mark) emulsion grade resin 301) (80 g), glycerol (20 g), and triethyl phosphate (300 g) in a suction flask immersed in an oil bath at 90—100°C for 4 hours. Agitation was provided by a Teflon®-bladed mechanical stirrer. The stirrer was then removed, and the resulting solution was degassed by partial evacuation (266—399 mbar) until all bubbles had disappeared. The solution was free of visible gel particles and was clear. The concentration of glycerol in the solution was 5% by weight.

About 100 ml. of the above solution were cast on a smooth, glass plate (30.5×30.5×0.64 cm previously cleaned with chromic acid, water, and acetone) with a Gardner knife set at 1016 μm (0.10 cm gate). Relative humidity above the casting surface was 65%. After 5 minutes, during which time a portion of the solvent-non solvent had evaporated, the plate and cast film were immersed in a gelation bath, consisting of a mixture of about 10 liters of tap water and ice, for 30 minutes. The membrane formed and floated free of the glass during this time. It was then placed in a bath of warm tap water (50°C) for 5 minutes. The membrane then was stored in distilled water at ambient temperature. At no time during the above steps of forming the membrane was it held or fastened to restrain it from shrinking unevenly. The membrane formed by this process was smooth and unwrinkled.

The above produced membrane was evaluated in a Thin-Channel Ultrafiltration System, using water, Blue Dextran solution, and polyethylene glycol solutions. Data are shown in Table 1.

Examples 2—7

The same general procedure was used as in Example 1 except for the glycerol concentration, which was varied from 1 to 8%. Test results are compared in Table 1.

# 0 040 670

### TABLE 1

| Example | Glycerol conc'n. (%) | Feed* | Retention (%) | Flux ** (ml/cm²/min.) |
|---|---|---|---|---|
| 2 | 3 | BD | ≥98 | 0.01 |
| | | H₂O | — | 0.01—0.02 |
| | | C-20 | >98 | 0.01 |
| | | C-6 | >95 | 0.01—0.02 |
| | | C-1 | 20—35 | 0.02 |
| 1 | 5 | BD | ≥98 | 0.02—0.08 |
| | | H₂O | — | 0.04—0.1 |
| | | C-20 | ≥98 | 0.01—0.03 |
| | | C-6 | 70—90 | 0.03—0.05 |
| | | C-1 | 4—30 | 0.04—0.05 |
| 3 | 6 | BD | ≥98 | 0.06—0.1 |
| | | H₂O | — | 0.1—0.2 |
| | | C-20 | 82—89 | 0.02—0.04 |
| 4 | 7 | BD | ≥98 | 0.2 |
| | | H₂O | — | 0.3—0.5 |
| | | C-20 | 68—79 | 0.05—0.06 |
| | | C-6 | 0 | 0.3—0.5 |
| 5 | 8 | BD | 90 | 0.05—0.1 |
| | | H₂O | — | 0.3—0.6 |
| | | C-20 | 70—78 | 0.02—0.05 |
| 6 | 2 | H₂O | — | 0.005—0.007 |
| | | C-1 | 51—76 | 0.005 |
| | | H₂O | — | 0.005 |
| | | C-6 | 64—92 | 0.003 |
| | | BD | >98 | 0.004 |
| 7 | 1 | H₂O | — | <0.001 |

*BD=0.1% Aqueous Blue Dextran 2000 Solution (M.W. 2,000,000)
C-20=1% Aqueous polyethylene glycol 20M solution (M.W. 15,000—20,000)
C-6=1% Aqueous polyethylene glycol 6000 solution (M.W. 6000)
C-1=1% Aqueous polyethylene glycol 1000 solution (M.W. 1000)
** Flux and retention at 3.1 bar. For Example 6 and 7, flux and retention at 11.5 bar.

Examples 8—12

The same general procedure was used as in Example 1 except for the solvent employed. Test results are compared in Table 2.

TABLE 2

| Example | Solvent | Blue dextran[*] | | H₂O Flux[**] | Polyethylene glycol 20M [***] | |
|---|---|---|---|---|---|---|
| | | Flux | Retention | | Flux | Retention |
| 8 | Hexamethyl Phosphoramide | 0.08—0.09 | >98% | 0.1 | | |
| 1 | Triethyl Phosphate | 0.02—0.08 | >98% | 0.04—0.1 | 0.01—0.03 | ≥98% |
| 9 | 1-Methyl-2-Pyrrolidinone | 0.03 | >98% | 0.1 | | |
| 10 | Dimethyl Acetamide | 0.02—0.03 | >98% | 0.05 | | |
| 11 | Dimethyl Formamide | 0.006 | >98% | 0.01 | 0.004 | 98% |
| 12 | Propylene Carbonate | 0.1 | 80—85% | 0.25 | | |

\* 0.1% Blue Dextran 2000 aqueous solution feed.
  Flux in ml/cm²/min. at 3.1 bar.
\*\* Water flux in ml./cm²/min. at 3.1 bar.
\*\*\* 1% aqueous solution of polyethylene glycol 20M feed.
  Flux in ml/cm²/min. at 3.1 bar.

# 0 040 670

Examples 13—20

A comparison of some other non-solvents in the casting solution is set forth in the following table.

## TABLE 3

| Example[*] | Non-solvent | Feed | Pressure | Retention | Flux |
|---|---|---|---|---|---|
| 13 | Glycerol | BD | 3.1 bar | >98% | 0.02—0.08 ml/cm²/min. |
| | | $H_2O$ | " | — | 0.04—0.1 |
| | | C-20 | " | ≧98 | 0.01—0.03 |
| 14 | Phosphoric Acid | BD | " | >98 | 0.06—0.07 |
| | | $H_2O$ | " | — | 0.1 |
| | | C-20 | " | >98 | 0.03—0.04 |
| 15 | Ethylene Glycol | BD | " | ≧95 | 0.01 |
| | | $H_2O$ | " | — | 0.01 |
| | | C-20 | " | >98 | 0.005—0.008 |
| 16 (Comparative Example) | Pentaerythritol | BD | " | >98 | 0.001 |
| | | $H_2O$ | " | — | 0.001 |
| | | $H_2O$ | 7.9 bar | — | 0.04 |
| | | $H_2O$ | 9.6 bar | — | 0.07 |
| 17 (Comparative Example) | Citric Acid | BD | 3.1 bar | >98 | <0.001 |
| | | $H_2O$ | 3.1 bar | — | <0.001 |
| | | $H_2O$ | 9.6 bar | — | <0.001 |
| 18 (Comparative Example) | Bis-Phenol A | $H_2O$ | 3.1 bar | — | <0.001 |
| | | $H_2O$ | 9,6 bar | — | <0.001 |
| 19 (Comparative Example) | Acetic Acid | $H_2O$ | 3.1 bar | — | <0.001 |
| 20 (Comparative Example) | Ethyl Acetoacetate | $H_2O$ | 7.9 bar | — | <0.001 |

* Membranes were made with 20% vinylidene fluoride homopolymer, 5% non-solvent, and 75% triethyl phosphate in the casting solution. Other conditions are described in Example 1.

Example 21—23

Vinylidene fluoride—tetrafluoroethylene copolymer resins having the monomer weight percentages reported in the table below were cast as generally described for Example 1 except that solution concentrations were at either 20 or 30 weight percent as reported below and heat stabilization of the membrane was omitted. The ultrafiltration data for these membranes is given in the following table.

## TABLE 4

| Example | Composition VF₂/TFE | Casting solution, conc'n. Polymer | Glycerol | Test feed | Membrane evaluation Retention | Flux | Pressure |
|---|---|---|---|---|---|---|---|
| | | | | | % | (ml/cm²/min) | (bar) |
| 21 | 95/5 | 20% | 5% | $H_2O$ | — | 0.02—0.07 | 3.1 |
| | | | | BD | >98 | 0.004—0.015 | |
| | | | | $H_2O$ | — | 0.008—0.02 | |
| | | | | C-20M | 99 | 0.003—0.008 | |
| | | | | $H_2O$ | — | 0.007—0.03 | |
| 22 | 70/30 | 20% | 5% | Poor Quality, Not Tested | | | |
| 23 | 70/30 | 30% | 5% | $H_2O$ | — | 0.001 | 3.1 |
| | | | | $H_2O$ | — | 0.002—0.003 | 11.5 |

7

## Examples 24—26

A 20 weight percent solution of a mixture of resins consisting of 16 parts vinylidene fluoride homopolymer and 4 parts of poly(methyl methacrylate) (Lucite 140 (trade mark)) in triethyl phosphate and containing 5 weight percent glycerol, was prepared in a manner similar to the solution preparation in Example 1. Three 1016 µm films of the solution were cast on a glass plate, the solutions allowed to evaporate at room temperature for 5 minutes and the films gelled by immersion in an ice-water bath for 30 minutes. The membranes were then stabilized by immersion in hot water (50°C) for 5 minutes. The resulting membranes were kept wet with water, and flux and water retention properties determined at 3.1 bar by the procedure used in the foregoing examples. The results are shown in the following table.

### TABLE 5

| Example | Water flux | Blue dextran Flux | Blue dextran Retention | Water Flux | Water Flux | C-20 Retention |
|---------|-----------|------|-----------|------|------|-----------|
| 24 | 0.16 | 0.03 | >98 | 0.06 | 0.02 | 94 |
| 25 | 0.10 | 0.03 | >98 | 0.03 | 0.05 | 34 |
| 26 | 0.11 | 0.03 | >98 | 0.06 | 0.02 | 94 |

## Example 27

To demonstrate that vinylidene fluoride polymers produced by a suspension polymerization process are also useful for this invention, a casting solution was prepared by agitating a mixture of vinylidene fluoride homopolymer (Kynar (trade mark) grade 821, suspension grade resin), (60 g), glycerol (24 g), and triethyl phosphate (316 g) for 4 hr at 90—95°C. Agitation was provided by a Teflon®-bladed mechanical stirrer. The stirrer was then removed, and the resulting solution was degassed by partial evacuation (333—532 mbar) until all bubbles had disappeared. The solution was free of visible gel particles and was clear. The concentration of glycerol in the solution was 6% by weight.

A membrane was cast with this solution onto a clean, smooth glass plate with a Gardner knife set at 508 µm. After an evaporation time of 5 min, the plate and cast film were immersed in a gelation bath of iced water (2—3°C) for 30 min. The membrane formed and floated free of the glass during this time.

During the steps of formation of the membrane through gelation, the membrane was not taped or restrained in any way and, surprisingly provided a smooth, unwrinkled membrane product. Later, the membrane was heat stabilized for 30 min in water at 100°C.

Tests were performed on the membrane of this Example in accordance with the procedure described in Example 1 and the results are shown in the following table.

### TABLE 6

| Example | Glycerol conc'n % | Feed | Retention, % | Flux |
|---------|------------------|------|--------------|------|
| 27 | 6 | B.D. | >98 | 0.1 |
|    |   | H₂O | — | 0.07 |
|    |   | C-20 | 97 | 0.03 |

## Example 28

A casting solution was prepared by agitating a mixture of vinylidene fluoride homopolymer powder (120 g), glycerol (36 g), and triethyl phosphate (444 g.) for 1-1/2 hr. at 90—95°C. Agitation was then stopped, the mixture was allowed to cool to room temperature, and was stored overnight in a stoppered container. The following day the mixture was reheated to 90—95°C and agitated for an additional 1-1/2 hr. Agitation was provided by a Teflon-bladed mechanical stirrer. The stirrer was then removed, and the resulting solution was degassed by partial evacuation (333—532 mbar) until all bubbles had disappeared. The solution was free of visible gel particles and was clear. The concentration of glycerol in the solution was 6% by weight.

Four membranes were cast from this solution onto 30×90 cm (12×36 inch) smooth glass plates. In all cases the temperature of the solution at the time of casting was 91—93°C, the thickness of the cast film was 508 µm, and the relative humidity above the casting surface at the time of casting was 74%. In each case, after the cast film had been allowed to evaporate for 5 min. at ambient temperature, the plate and cast film were immersed in an iced-water gelation bath (2—4°C) for 30 min. The membrane formed and floated free of the glass during this time.

The membranes were stored in distilled water at ambient temperature for 12 days and then were heat treated by immersion for 30 min. in water at 95—100°C. As soon as the membranes were removed from the hot water they were cooled to ambient temperature by immersion in a large volume of water at ambient temperature.

8

The wet membranes were glycerol treated by immersion in glycerol for about 30 min., then were hung vertically by clips attached to one end to allow excess glycerol to drain off. The membranes were then allowed to dry at ambient temperature.

A spiral-wound module was prepared using two of these membranes. It was flushed with water for 30 min. to remove glycerol from the membranes, and then found to retain Blue Dextran quantitatively when tested with a 0.09% aqueous solution of Blue Dextran 2000 at 1.9 bar and ambient temperature.

This module was tested for long term stability at high temperature by operation in an automated ultrafiltration unit for over a month at 85°C. The feed was a 0.4% solution of Elvanol T-25 (trade mark for a fully hydrolyzed polyvinyl alcohol from E.I. DuPont de Nemours & Co.) in deionized water. The feed solution concentration was kept constant by continuously returning the permeate to the feed tank and by adding deionized water as necessary to make up for water lost by evaporation. A pressure of 2.4 bar and a feed recirculation rate of 38 l/min. were used throughout the study.

Representative data is given below.

| Time | Flux | Retention of PVA |
|------|------|------------------|
| Start | 0.03 ml/cm$^2$ min. | —— |
| 2 days | 0.02 | 97.2% |
| 27 days | 0.02 | 97.4% |

Example 29

Another batch of membranes was prepared by the same general procedure as in Example 28 except for the following. Solution preparation, requiring a total of 3-1/2 hr., and casting were done on the same day. The glycerol concentration in the casting solution was the same as in Example 28 (6% by weight). The relative humidity during casting was 69%. After gelation in iced-water, the membranes were stored in water for 3 days at ambient temperature, and then were heat treated for 30 min. in water at 95°C. The membranes were then allowed to dry in air at room temperature without prior treatment with glycerol or any other humectant or surfactant.

A spiral-wound module was prepared using two of these membranes. The module was soaked for 1-1/2 hr. in a 1:1 mixture of isopropanol and water and then soaked in pure water overnight. It was flushed with water for about 30 min. to remove any residual alcohol and then found to retain Blue Dextran quantitatively when tested with a 0.09% aqueous solution of Blue Dextran 2000 at 1.9 bar and ambient temperature.

This module was tested for long term stability at high temperature in a 0.4% solution of polyvinyl alcohol by the same procedure and under the same conditions employed in Example 28 except that the pressure was 2.7 bar.

Representative data is given below.

| Time | Flux | Retention of PVA |
|------|------|------------------|
| Start | 0.03 ml/cm$^2$ min. | 93.3% |
| 3 days | 0.02 | 97.3% |
| 7 mo. | 0.02 | 97.5% |

Example 30 (comparative example)

A casting solution was prepared by stirring a mixture of polysulfone resin pellets (Udel P-1700, trade mark of Union Carbide Corp.) (75 g) and hexamethyl phosphoramide (425 g) for 5 hrs. at 90—95°C until all of the polymer was dissolved. The solution was then allowed to stand undisturbed for 15 min. at atmospheric pressure to permit air bubbles to escape. The resulting solution was clear and bubble-free.

A 254 μm film of this solution was cast onto a smooth, clean glass plate. Tape had been placed along the edges of the plate prior to casting to assure adherence of the film to the plate during subsequent processing steps. Immediately after the film had been cast the plate and cast film were placed under an electric heater at a temperature of 65.6°C for 3 min. The plate and film were then removed and immersed in a water bath at ambient temperature for gelation. After 30 min. the resulting membrane was cut free of the tape, removed from the glass plate, and stored in water at ambient temperature.

The membrane was tested by the same procedure used for Example 1. Results were as follows:

| Feed | Retention | Flux |
|------|-----------|------|
| H₂O | — | 2.1 ml/cm² min. |
| B.D. | >98% | 0.2 |
| H₂O | — | 0.9 |
| C-20 | 95% | 0.07 |

Example 31 (comparative example)

Vinylidene fluoride homopolymer and polysulfone membranes were prepared by procedures illustrated in the foregoing examples.

Membranes were characterized by measuring distilled water flux and the flux and retention of 1% polyethylene glycol 20M solutions at 3.1 bar in a thin-channel ultrafiltration cell.

For chemical stability tests, membrane samples with known flux and retention were soaked in the specified solution or solvent for a given period (usually ~1 month) and then thoroughly rinsed with distilled water and retested. If no significant change in flux or retention was found, the sample was returned to the chemical solution for an additional period.

Results are shown in the following tables.

TABLE 7

| Exposure chemical | Poly(vinylidene fluoride) | | Polysulfone | |
|---|---|---|---|---|
| 1% NaOCl | 6 mo. | OK[1] | 1 mo. | failed[2] |
| | 8 mo. | failed[2] | | |
| 10% Na₂Cr₂O₇ in 96% H₂SO₄ | 1 week | OK[1] | 2 hr. | disintegrated |
| | 1.5 mo. | failed[2] | | |
| 5% Na₂Cr₂O₇ in 48% H₂SO₄ | 5 mo. | OK[1] | <2 weeks | disintegrated |
| 10% H₂O₂ | 1.5 mo. | OK[1] | 1 week | OK[1] |
| | 5 mo. | failed[2] | 1.5 mo. | failed[2] |
| 48% H₂SO₄ | 25 mo. | OK[1] | 5 mo. | OK[1] |
| 18% HCl | 25 mo. | OK[1] | | |
| 35% HNO₃ | 25 mo. | OK[1] | 5 mo. | OK[1] |
| 42% H₃PO₄ | 25 mo. | OK[1] | | |
| 10% NaOH | 1 mo. | OK[1,3] | | |
| | 3 mo. | failed[2,3] | | |
| 1% NaOH | 24 mo. | OK[3,4] | | |
| 1% Na₂CO₃ | 24 mo. | OK[1] | | |

[1.] No significant change in flux or in retention of polyethylene glycol 20M.
[2.] Became brittle, cracked and chipped.
[3.] Became discolored.
[4.] Flux has increased and retention of polyethylene glycol has decreased; however, ~90% of the polyethylene glycol still retained.

TABLE 8

| Exposure chemical | Poly(vinylidene fluoride) | | Polysulfone |
|---|---|---|---|
| 95% Ethanol | 5 mo. | OK[1] | 5 mo. membrane shrinking[2] |
| 1:1 Acetone/Water | 1 mo. | OK[1] | 3 weeks membrane shrinking[2] |
| n-butanol | 1 mo. | OK[1] | 3 weeks membrane shrinking[2] |
| Ethyl acetate | 1 mo. | OK[1] | shrivels instantly |
| Tetrahydrofuran | 1 mo. | OK[1] | dissolves instantly |
| Toluene | 1 mo. | OK[1] | shrivels instantly |
| Chlorobenzene | 1 mo. | OK[1] | dissolves instantly |

[1.] No significant change in flux or in retention of polyethylene glycol 20M.

[2.] Membrane shrank ~5% and could not be sealed in test cell adequately for testing.

## Claims

1. A process for preparing an ultrafiltration membrane of a resinous, film-forming polymer selected from the group consisting of (a) vinylidene fluoride homopolymer, (b) copolymers of at least 70 weight percent of vinylidene fluoride and up to 30 weight percent tri- or tetrafluoroethylene, and (c) a blend of no less than about 75 weight percent of either (a) or (b) with no greater than about 25 percent of a thermoplastic methyl methacrylate polymer, said membrane having a surface layer containing a multiplicity of pores having a diameter within the range of from 1 to 100 nm, and a support layer thicker than and having less resistance to fluid flow than said surface layer, by casting from solvent/non-solvent systems, characterized by casting on a smooth solid surface a solution of said resinous, film-forming polymer having a polymer concentration ranging from 12 to 32 weight percent, 65 to 80 weight percent of a solvent selected from the group consisting of triethyl phosphate, hexamethyl phosphoramide, 1-methyl-2-pyrrolidinone, dimethyl acetamide, dimethyl formamide, propylene carbonate and mixtures of said solvents, and from 1 to 10 weight percent of a non-solvent for said polymer selected from the group consisting of glycerol, ethylene glycol, phosphoric acid and mixtures thereof, to form a sheet, evaporating a portion of said liquid mixture from said sheet, and contacting said sheet with a liquid gelation medium.

2. The process of claim 1 wherein the resinous, film-forming polymer is vinylidene fluoride homopolymer.

3. The process of claim 1 wherein the resinous, film-forming polymer is a copolymer of at least 70 weight percent of vinylidene fluoride and up to 30 weight percent of tri- or tetrafluoroethylene.

4. The process of claim 2 or 3 wherein the solvent is triethyl phosphate.

5. The process of claim 4 wherein the liquid gelation medium is water.

6. The process of claim 1, 2, 4 or 5 wherein, after the membrane is formed, it is subjected to a heat treatment at a temperature ranging up to 100°C.

7. The process of claim 1, 2, 3 or 4 wherein the non-solvent is glycerol.

8. The process of claim 4 wherein the cast sheet is contacted with said liquid gelation medium in the absence of physical restraint on the edges of said sheet.

## Patentansprüche

1. Verfahren zur Herstellung einer Ultrafiltrationsmembran aus einem harzartigen, filmbildenden Polymeren, ausgewählt aus der Gruppe, bestehend aus (a) Vinylidenfluoridhomopolymer, (b) Copolymeren aus mindestens 70 Gew.-% Vinylidenfluorid und bis zu 30 Gew.-% Tri- oder Tetrafluorethylen und (c) einem Gemisch aus nicht weniger als etwa 75 Gew.-% von entweder (a) oder (b) mit nicht mehr als etwa 25% eines thermoplastischen Methylmethacrylatpolymeren, wobei die genannte Membran eine Oberflächenschicht, die eine Vielzahl von Poren mit einem Durchmesser im Bereich von 1 bis 100 µm enthält, und eine Trägerschicht, die dikker ist und einen geringeren Widerstand gegenüber einem Fluidfluß aufweist als die genannte Oberflächenschicht, besitzt, durch Gießen aus Lösungsmittel-/Nichtlösungsmittelsystemen, dadurch gekennzeichnet, daß man auf eine glatte feste Oberfläche eine Lösung des genannten harzartigen, filmbildenden Polymeren mit einer Polymerkonzentration im Bereich von 12 bis 32 Gew.-%, 65 bis 80 Gew.-% eines Lösungsmittels, ausgewählt aus der Gruppe, bestehend aus Triethylphosphat, Hexamethylphosphoramid, 1-Methyl-2-pyrrolidinon, Dimethylacetamid, Dimethylformamid, Propylencarbonat und Gemischen der genannten Lösungsmittel, und 1 bis 10 Gew.-% eines Nichtlösungsmittels für das genannte Polymere, ausgewählt aus der Gruppe, bestehend aus Glycerin, Ethylenglykol, Phosphorsäure und Gemischen davon, gießt, um eine Platte zu bilden, einen Teil des genannten Flüssigkeitsgemisches von der genannten Platte abdampft und die genannte Platte mit einem flüssigen Gelierungsmedium kontaktiert.

2. Verfahren nach Anspruch 1, dadurch gekennzeichnet, daß das harzartige, filmbildende Polymere ein Vinylidenfluoridhomopolymeres ist.

3. Verfahren nach Anspruch 1, dadurch gekennzeichnet, daß das harzartige, filmbildende Polymere ein Copolymeres aus mindestens 70 Gew.-% Vinylidenfluorid und bis zu 30 Gew.-% Tri- oder Tetrafluorethylen ist.

4. Verfahren nach Anspruch 2 oder 3, dadurch gekennzeichnet, daß das Lösungsmittel Triethylphosphat ist.

5. Verfahren nach Anspruch 4, dadurch gekennzeichnet, daß das flüssige Gelierungsmedium Wasser ist.

6. Verfahren nach Anspruch 1, 2, 4 oder 5, dadurch gekennzeichnet, daß man die Membran nach ihrer Bildung einer Wärmebehandlung bei einer Temperatur von bis zu 100°C unterwirft.

7. Verfahren nach Anspruch 1, 2, 3 oder 4, dadurch gekennzeichnet, daß das Nichtlösungsmittel Glycerin ist.

8. Verfahren nach Anspruch 4, dadurch gekennzeichnet, daß die gegossene Platte mit dem flüssigen Gelierungsmedium in Abwesenheit einer physikalischen Beschränkung auf die Kanten der genannten Platte kontaktiert.

**Revendications**

1. Procédé en préparation d'une membrane d'ultrafiltration en un polymère résineux filmogène choisi dans le groupe comprenant (a) un homopolymère de fluorure de vinylidène, (b) des copolymères d'au moins 70% en poids de fluorure de vinylidène avec jusqu'à 30% en poids de tri- ou de tétrafluoréthylène et (c) un mélange ne contenant pas moins d'environ 75% en poids de (a) ou (b) avec pas plus d'environ 25% d'un polymère thermoplastique de méthacrylate de méthyle, ladite membrane ayant une couche de surface présentant de très nombreux pores d'un diamètre compris dans l'intervalle de 1 à 100 μm, et une couche de support plus épaisse et moins résistante à l'écoulement d'un fluide que ladite couche de surface, par coulée à partir de systèmes solvent/non-solvant, caractérisé par la coulée sur une surface unie lisse d'une solution dudit polymère filmogène résineux ayant une concentration en polymère de 12 à 32% en poids, contenant 65 à 80% en poids d'un solvant choisi dans le groupe comprenant le phosphate de triéthyle, l'hexaméthylphosphoramide, la 1-méthyl-2-pyrrolidinone, le diméthylacétamide, le diméthylformamide, le carbonate de propylène et des mélanges de ces solvants, et 1 à 10% en poids d'un non-solvant pour ledit polymère, choisi dans le groupe comprenant le glycérol, l'éthylèneglycol, l'acide phosphorique et leurs mélanges, pour former une feuille, l'évaporation d'une portion dudit mélange liquide de ladite feuille et la mise en contact de cette dernière avec un milieu liquide de gélification.

2. Procédé suivant la revendication 1, dans lequel le polymère filmogène résineux est un homopolymère de fluorure de vinylidène.

3. Procédé suivant la revendication 1, dans lequel le polymère filmogène résineux est un copolymère d'au moins 70% en poids de fluorure de vinylidène et d'une proportion allant jusqu'à 30% en poids de tri- ou de tétrafluoréthylène.

4. Procédé suivant la revendication 2 ou 3, dans lequel le solvant est le phosphate de triéthyle.

5. Procédé suivant la revendication 4, dans lequel le milieu liquide de gélification est l'eau.

6. Procédé suivant la revendication 1, 2, 4 ou 5, dans lequel, après que la membrane a été formée, elle est soumise à un traitement à la chaleur à une température s'élevant à 100°C.

7. Procédé suivant la revendication 1, 2, 3 ou 4, dans lequel le non-solvant est le glycérol.

8. Procédé suivant la revendication 4, dans lequel la feuille coulée est mise en contact avec ledit milieu liquide de gélification sans entrave physique sur les bords de ladite feuille.